# EUROPÄISCHE PATENTANMELDUNG

(11) **EP 2 759 432 A2**
(43) Veröffentlichungstag der Anmeldung: **30.07.2014**
(21) Anmeldenummer: 13198308.2
(22) Anmeldetag: 19.12.2013
(51) Int. Cl.: B60J 7/06

(54) **Längsgurt für LKW-Schiebeverdeckstruktur**

(30) Priorität: 23.01.2013 DE 102013201003
(71) Anmelder: ZF Friedrichshafen AG, 88038 Friedrichshafen (DE)
(72) Erfinder: Tiemann, Burkhard, 49152 Bad Essen (DE); Lagemann, Bernard, 49434 Neuenkirchen (DE)

(57) **Zusammenfassung**

Die Erfindung betrifft einen Längsgurt (3, 3') für eine Schiebeverdeckstruktur eines Lastwagens, welcher einen einstückigen Profilkörper (16) mit einer Vielzahl von Laufflächen (17, 18, 19) umfasst, wobei erste Laufflächen (17) für Rollen (33, 33', 34) einer Vielzahl von Rollenwagen (4, 5, 6) zum Bewegen einer oberen Dachstruktur, zweite Laufflächen (18) für Rollen (36, 37) einer Vielzahl von Rollenwagen (35) zum Bewegen einer seitlichen Wandstruktur und dritte Laufflächen (19) zur Aufnahme von Rollen (38, 38') zum Halten und Bewegen von Rungen vorgesehen sind, wobei der Profilkörper (16) aus einem Winkelprofil mit einem horizontalen ersten Schenkel (20), welcher die ersten Laufflächen (17) aufweist, und einem vertikalen zweiten Schenkel (21), welcher die zweiten und dritten Laufflächen (18, 19) aufweist, gebildet ist. Die Erfindung betrifft weiterhin eine Schiebeverdeckstruktur (1) mit derartig ausgebildeten Längsgurten (3, 3').

## Beschreibung

Die Erfindung betrifft einen Längsgurt für eine Schiebeverdeckstruktur gemäß dem Oberbegriff des Anspruchs 1 und eine Schiebeverdeckstruktur, insbesondere für Lastwagen, gemäß dem Oberbegriff des Anspruchs 14.

Lastwagen, das heißt Lastkraftwagen und Anhänger (Trailer) und Auflieger der Lastkraftwagen, sind im Stand der Technik in verschiedenen Ausgestaltungen bekannt. So sind beispielsweise die sogenannten Pritschenwagen bekannt, die eine ebene offene Ladefläche hinter der Fahrerkabine aufweisen. Um dennoch einen sicheren und trockenen Transport von Ladung zu gewährleisten, ist die Ladefläche derartiger Pritschenwagen üblicherweise mit einem Verdeck versehen. Im Stand der Technik sind hierzu feste Verdecke und Schiebeverdecke bekannt. Schiebeverdecke können geöffnet werden, weisen gegenüber festen Verdecken daher den Vorteil auf, dass der Ladevorgang des Lastwagens, beispielsweise bei Kranbeladung, durch den Schiebemechanismus erheblich erleichtert wird, da der Laderaum von oben oder seitlich zugänglich gemacht werden kann.

Um ein leichtes Öffnen und Schließen des Schiebeverdecks zu ermöglichen, ist es erforderlich, dass die auf der Verdeckstruktur aufliegende Plane beim Öffnen gleichmäßig gefaltet wird. Hierzu ist die Schiebeverdeckstruktur mit entlang der Längsseiten der Ladefläche verlaufenden Längsgurten ausgerüstet, auf denen eine Vielzahl von miteinander gelenkig verbundenen Rollenwagen laufen. Auch die beweglichen Seitenwände können mittels eines ähnlichen aus dem Stand der Technik bekannten Rollwagenmechanismus geöffnet und geschlossen werden.

Aus DE 89 10 572 U1 ist ein Fahrzeugaufbau mit in Fahrzeuglängsrichtung verschiebbaren Wandungen, die an oberen Längsgurten des Fahrzeugaufbaus aufgehängt sind, bekannt. An einem benachbart zu den Profilstegen mit Führungsschienen für die Seitenrollenwagen angeordneten weiteren T-förmigen Profilsteg ist eine Führungsschiene für Rollenwagen zum lateralen Verschieben der Querspriegel des Dachs vorgesehen.

Die bei den bekannten Schiebeverdeckstrukturen für Lastwagen verwendeten Längsgurte, welche sowohl Rollenwagen zum Hin- und Herbewegen der Seitenwände als auch Rollenwagen zum Hin- und Herbewegen der Querstriegel umfassen, beanspruchen relativ viel Raum, wodurch der Laderaum im Inneren der Schiebeverdeckstruktur nicht vollständig ausgenutzt werden kann. Auch müssen Längsgurte, welche sowohl Rollenwagen für die Seitenwände als auch Rollenwagen für die Dachkonstruktion tragen, eine hohe Stabilität aufweisen.

Daher ist es eine Aufgabe der vorliegenden Erfindung, einen Längsgurt für eine Schiebeverdeckstruktur eines Lastwagens bereitzustellen, der besonders platzsparend ausgebildet ist und eine hohe Stabilität aufweist.

Diese Aufgabe wird durch einen Längsgurt für eine Schiebeverdeckstruktur mit den Merkmalen gemäß Anspruch 1 gelöst. Bevorzugte Ausführungsformen der Erfindung sind in den abhängigen Ansprüchen definiert.

Es wird ein Längsgurt für eine Schiebeverdeckstruktur eines Lastwagens bereitgestellt, welcher einen einstückigen Profilkörper mit einer Vielzahl von Laufflächen umfasst, wobei erste Laufflächen für Rollen einer Vielzahl von Rollenwagen zum Bewegen einer oberen Dachstruktur, zweite Laufflächen für Rollen einer Vielzahl von Rollenwagen zum Bewegen einer seitlichen Wandstruktur und dritte Laufflächen zur Aufnahme von Rollen mit daran angeordneten Rungen vorgesehen sind, wobei der Profilkörper aus einem Winkelprofil mit einem horizontalen ersten Schenkel, welcher die ersten Laufflächen aufweist, und einem vertikalen zweiten Schenkel, welcher die zweiten und dritten Laufflächen aufweist, gebildet ist. Durch die erfindungsgemäße Konfiguration kann eine besonders platzsparende Lösung erzielt werden, welche dennoch die nötige Stabilität aufweist. Die Ladung im Inneren der Schiebeverdeckstruktur bis direkt unter die obere Dachstruktur wird hierdurch ermöglicht. Der Längsgurt weist darüber hinaus ein besonders leichtes Gewicht bei hoher Biegesteifigkeit und hohem Flächenmoment auf. Die zuvor beschriebene Anwendung des Längsgurtes für eine Schiebeverdeckstruktur eines Lastwagens umfasst sowohl die Anwendung für eine angetriebene Zugmaschine als auch für einen gezogenen Anhänger oder Auflieger. Der Längsgurt kann darüber hinaus auch für andere Anwendungen eingesetzt werden, beispielsweise für eine Schiebeverdeckstruktur eines Sightseeing-Busses oder eines anderen Sonderfahrzeugs. Die Schiebeverdeckstruktur kann allgemein Straßenfahrzeugen oder schienengebundenen Fahrzeugen zugeordnet sein, wobei ein Öffnen bzw. Schließen der Schiebeverdeckstruktur je nach Anordnung derselben in Fahrzeuglängs- oder in Fahrzeugquerrichtung erfolgen kann. Weiterhin kann die Schiebeverdeckstruktur auch einer stationären Einrichtung wie beispielsweise einem Container zugeordnet sein.

Gemäß einer bevorzugten Ausführungsform ist zumindest eine der ersten Laufflächen im Wesentlichen vertikal fluchtend über zumindest einer der zweiten Laufflächen angeordnet. Diese Anordnung trägt weiter zur Stabilität und zur Begrenzung der Dimensionierung des Längsgurts bei. Vorzugsweise sind darüber hinaus eine Laufkammer für eine Abstandsrolle eines Rollenwagens für die seitliche Plane bzw. eines seitlichen Rollenwagens, eine Laufkammer für einen Rollenwagen für Rungen und eine Laufkammer für eine Laufrolle des Rollenwagens für die seitliche Plane bzw. seitlichen Rollenwagens in vertikaler Richtung im Wesentlichen übereinander angeordnet.

Gemäß noch einer bevorzugten Ausführungsform liegt der Massenschwerpunkt des Profilkörpers an einem inneren Profilrand, insbesondere der der Fahrzeugmitte zugewandte Profilrand, des vertikalen zweiten Schenkels. Hierdurch erlangt der Längsgurt eine besonders hohe Stabilität.

Gemäß noch einer weiteren bevorzugten Ausführungsform umfassen die zweiten Laufflächen horizontale und vertikale Laufflächen, wobei an der vertikalen Lauffläche der zweiten Laufflächen eine Abstandsrolle eines Rollenwagens von der Vielzahl von Rollenwagen zum Bewegen der seitlichen Wandstruktur läuft. Horizontale Laufflächen bedeutet hier, dass die Laufflächen im Wesentlichen in der horizontalen Ebene angeordnet sind, wohin gegen vertikale Laufflächen im Wesentlichen senkrecht angeordnet sind. Vorzugsweise ist die Lauffläche für die Abstandsrolle unterhalb der Lauffläche für die seitlichen Rollenwagen angeordnet. Diese Anordnung ist im Hinblick auf die Stabilität und auf das Raumerfordernis vorteilhaft.

Vorzugsweise umfassen die ersten Laufflächen ebenfalls horizontale und vertikale Laufflächen, wobei an der vertikalen Lauffläche der ersten Laufflächen eine radiale Führungsrolle eines Rollenwagens von der Vielzahl von Rollenwagen läuft. Weiterhin ist es bevorzugt, wenn zwei horizontale erste Laufflächen für jeweils eine Rolle eines Rollenwagens in einem Abstand von mindestens 10 cm angeordnet sind, wodurch eine besonders hohe Laufruhe beim Verschieben des Rollenwagens erzielt wird. Auch bevorzugt ist es, wenn die senkrecht stehenden ersten Laufflächen für die Führungsrolle gleichzeitig Wände von Versteifungstunneln bilden. Somit kann ein und dieselbe Wand zwei Funktionen erfüllen, wodurch weiter Bauraum eingespart werden kann.

Darüber hinaus ist es vorteilhaft, wenn zumindest eine der ersten Laufflächen in einem Verbindungseckbereich des ersten Schenkels und des zweiten Schenkels angeordnet ist. Dies ermöglicht ein weiteres Einsparen des für den Längsgurt benötigen Raumes.

Besonders bevorzugt sind zwei der ersten Laufflächen in dem Verbindungseckbereich angeordnet, welche in vertikaler Richtung gegenüberliegend angeordnet sind, um als obere und untere Lauffläche für eine Rolle eines Rollenwagens von der Vielzahl von Rollenwagen zum Bewegen der oberen Dachstruktur zu wirken. Hierdurch wird ein Abheben der Rolle des Rollenwagens nach oben verhindert.

Gemäß einer weiteren bevorzugten Ausführungsform bildet der Verbindungseckbereich eine im Wesentlichen U-förmige Laufkammer. Durch die U-förmige Ausbildung der Laufkammer kann die Rolle sicher zwischen den hierdurch gebildeten gegenüberliegenden Laufflächen gehalten werden Vorzugsweise sind die dritten Laufflächen an einem Endabschnitt des zweiten Schenkels angeordnet.

Weiterhin ist es vorteilhaft, wenn der erste Schenkel eine im Wesentlichen horizontal ausgerichtete Anschlagfläche aufweist, welche als Eingriffsfläche für einen mit einer entsprechenden Gegenfläche ausgebildeten Rollenwagen von der Vielzahl von Rollenwagen zum Bewegen der oberen Dachstruktur dient. Durch das Eingreifen des entsprechend ausgebildeten Rollenwagens bzw. dessen Untergreifen der Anschlagfläche wird verhindert, dass der Rollenwagen von der Lauffläche abhebt. Vorzugsweise ist die Anschlagfläche im Bereich der der Fahrzeugmitte zugewandten Seite des horizontalen ersten Schenkels angeordnet. Auch von Vorteil ist, wenn die Anschlagfläche benachbart zu der - im Hinblick auf die Fahrzeugmitte - inneren Lauffläche des ersten Schenkels angeordnet ist.

Ein weiterer Vorteil wird dadurch erzielt, wenn der Profilkörper mit zumindest einem Versteifungstunnel ausgebildet ist. Das Vorsehen von zumindest einem Versteifungstunnel verbessert die Biegesteifigkeit des Profilkörpers und somit des Längsgurts.

Vorzugweise sind an dem ersten Schenkel zumindest ein, insbesondere zwei, Versteifungstunnel vorgesehen. Die Versteifungstunnel sind vorzugsweise zwischen den beiden horizontalen ersten Laufflächen für die Rollen des Rollenwagens angeordnet, was die Biegesteifigkeit weiter verbessert.

Vorzugsweise sind auch an dem zweiten Schenkel mindestens ein, bevorzugt zumindest zwei, insbesondere drei, Versteifungstunnel vorgesehen. Auch hierdurch kann ein weiterer Vorteil im Hinblick auf eine Verbesserung der Biegesteifigkeit des gesamten Profilkörpers erzielt werden.

Darüber hinaus wird eine Schiebeverdeckstruktur bereitgestellt, welche zumindest einen Längsgurt, insbesondere zwei parallel angeordnete Längsgurte, gemäß den obigen Ausführungsformen aufweist.

Im Nachfolgenden werden Ausführungsformen der Erfindung unter Bezugnahme auf die beigefügte Zeichnung näher beschrieben. Es zeigen:
Fig. 1 eine Schiebeverdeckstruktur gemäß einer Ausführungsform der Erfindung;
Fig. 2 eine perspektivische Ansicht eines vorderen zweiten Endes der in Figur 1 dargestellten Schiebeverdeckstruktur in geöffnetem Zustand;
Fig. 3 zeigt eine Schnittansicht eines Längsgurts gemäß einer Ausführungsform;
Fig. 4 zeigt eine Schnittansicht eines Längsgurts gemäß einer weiteren Ausführungsform;
Fig. 5 zeigt eine Schnittansicht des in Figur 3 dargestellten Längsgurts nur mit Rollenwagen für die obere Dachstruktur;
Fig. 6 zeigt eine Schnittansicht des in Figur 3 dargestellten Längsgurts nur mit Seitenrollenwagen;
Fig. 7 zeigt eine Schnittansicht des in Figur 4 dargestellten Längsgurts mit allen Rollenwagen;
Fig. 8 zeigt eine perspektivische Ansicht des in Figur 7 dargestellten Längsgurts; und
Fig. 9 zeigt eine weitere perspektivische Ansicht des in Figur 4 dargestellten Längsgurts ohne Rollenwagen.

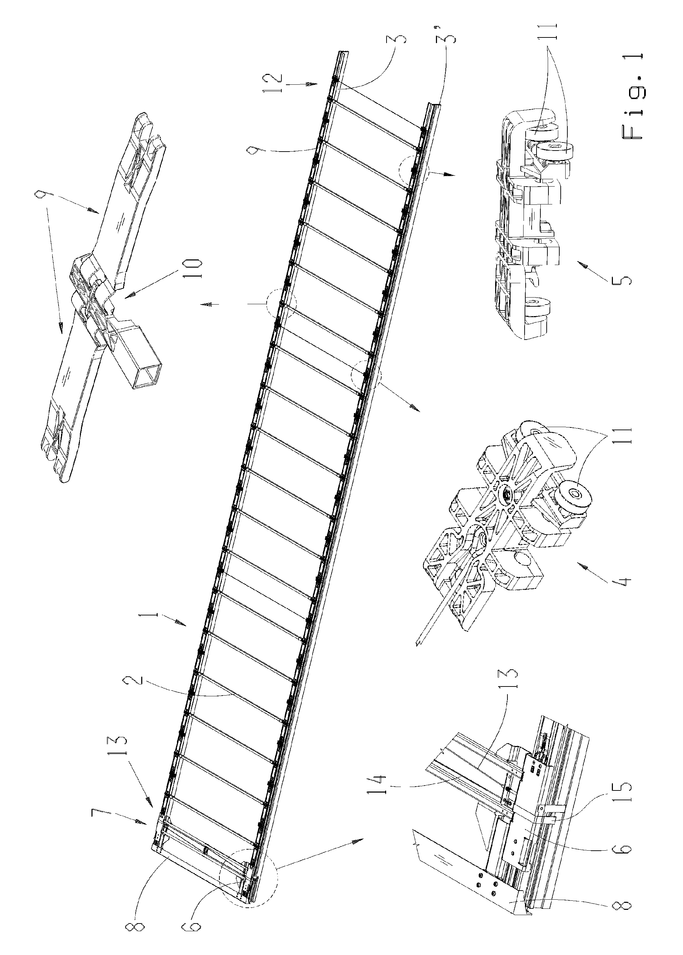

Figur 1 zeigt allgemein eine Schiebeverdeckstruktur 1 für Lastwagen bzw. Trailer, welche hier in ausgefahrenem bzw. geschlossenem Zustand dargestellt ist. Unter Lastwagen werden hier Lastkraftwagen, Lastkraftwagenanhänger und Lastkraftwagenauflieger verstanden. Die Schiebeverdeckstruktur 1 umfasst eine Vielzahl von Spriegeln 2, welche quer zwischen zwei parallel zueinander verlaufenden Längsgurten 3, 3' angeordnet sind. Auf den Spriegeln 2 liegt eine Folie bzw. Plane auf. Die als Schienen ausgebildeten Längsgurte 3, 3' sind einstückig aus Aluminium hergestellt und sind jeweilig mit Laufflächen versehen, an welchen eine Vielzahl von Rollenwagen mit jeweiligen Rollen 11 verschiebbar angeordnet sind, von denen hier lediglich ein mehrteilig ausgebildeter Rollenwagen 4 mit Seilanbindung, ein mehrteilig ausgebildeter Standard-Rollenwagen 5 und ein Endrollenwagen 6 exemplarisch dargestellt sind. Der Endrollenwagen 6 befindet sich an dem ersten Ende 7 der Schiebeverdeckstruktur 1, was dem hinteren Ende eines Lastwagens entspricht, an welchem beispielsweise eine Hebebühne angeordnet ist.

An dem gegenüberliegenden vorderen zweiten Ende 12 der Schiebeverdeckstruktur 1 befindet sich das geschlossene Ende, an welchem beispielsweise die Führerkabine des Lastkraftwagens angeordnet ist. Zwischen den jeweils in den Längsgurten 3 und 3' angeordneten Endrollenwagen 6 verläuft quer zu den Längsgurten 3, 3' ein Portal balken 8, welcher den Abschluss der Schiebeverdeckstruktur 1 bildet.

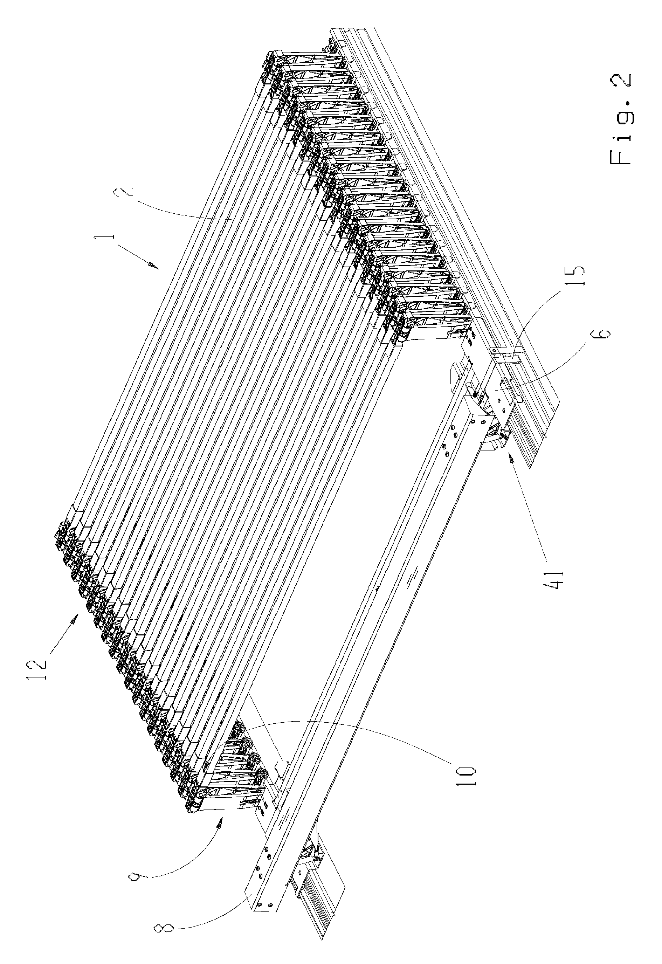

Der Portalbalken 8 dient dazu, einerseits die Plane als in Querrichtung versteifendes Element an dem Trailer zu befestigen. Weiterhin greifen typischerweise die Verschlüsse der Türen in den Portalbalken 8 ein, so dass bei verschlossenen Türen diese über die Türverschlüsse des Portalbalkens 8 ebenfalls befestigt und gesichert sind. Der Portalbalken 8 ist über eine Verbindungsstruktur 41 (siehe Figur 2), welche Hebelarme umfasst, mit den beidseitig angeordneten Endrollenwagen 6 verbunden, so dass durch Verschwenken der Hebelarme der Portalbalken 8 nach oben geklappt werden kann, um die Schiebeverdeckstruktur 1 zurückzuschieben. Weiterhin ist der Portalbalken 8 mit einer Winkelform ausgeführt, so dass er im heruntergeklappten Zustand auch die endseitigen Stirnseiten der Längsgurte 3, 3' zumindest teilweise übergreift. Um ein Verschieben des Endrollenwagens 6 in der Endposition bei geschlossener Plane zu verhindern, ist ein Verriegelungsmechanismus 13 vorgesehen. Durch Zug an einem Entriegelungsseil 14 kann der Verriegelungsmechanismus 13 freigegeben werden, so dass dann der Endrollenwagen 6 entlang der Längsgurte 3, 3' verschiebbar ist.

Eine Schlaufe 15 ist für die seitliche Betätigung des Verriegelungsmechanismus 13 dargestellt. Nach dem Entriegeln der Endrollenwagen 6 wird mit einer hier nicht dargestellten Stange, welche einen endseitigen Haken aufweist, an der Schlaufe 15 in Längsrichtung der Längsgurte 3, 3' gezogen und die Schiebeverdeckstruktur 1 hierdurch geöffnet. Damit bei diesem Öffnungsvorgang, bei welchem lediglich an einer Seite des Trailers an solch einer Schlaufe 15 gezogen wird, keine Verkantung, d. h. kein Verkippen oder Verdrehen in einer waagerecht stehenden Ebene, der Endrollenwagen 6 auftritt, weisen diese mehrere hier nicht sichtbare Rollen auf. Die Endrollenwagen 6 sind mit den Standard-Rollenwagen 5 über zwischen den jeweiligen Rollenwagen angeordnete Faltplatten 9 verbunden. In der hier dargestellten Ausführungsform sind jeweils 18 Faltplatten 9 pro Längsgurt 3 bzw. 3' vorgesehen. Mittig an den Faltplatten 9 ist eine Spriegelaufnahme 10 vorgesehen, an denen die Spriegel 2 befestigt sind, so dass die Spriegel 2 beim Öffnen der Schiebeverdeckstruktur 1 nach oben geschoben werden.

Zwischen den Standard-Rollenwagen 5 sind jeweils zwei Rollenwagen 4 mit Seilanbindung zum gegenüberliegenden Rollenwagen 4 vorgesehen, was der Stabilisierung dient. Insbesondere wird hierdurch eine zusätzliche Querversteifung erzielt, da durch das Seil, mit welchem die zwei gegenüberliegenden Rollenwagen 4 verbunden sind, Zugkräfte nach außen abgefangen werden. Wie in Figur 1 ersichtlich ist, sind hier zwei solcher quer zu den Längsgurten 3, 3' verlaufenden Seilanbindungen vorgesehen, welche die Längsgurte 3, 3' in Längsrichtung in etwa Dritteln. Die Längsgurte 3, 3' sind aus Metall, wie beispielsweise Aluminium, ausgebildet, wohingegen die Rollenwagen 4, 5, 6 und Faltplatten 9 zumindest überwiegend aus Kunststoff hergestellt sind.

Damit die hier nicht dargestellte Faltplane in geschlossenem Zustand nicht flattert, was zu einem erheblich höheren Kraftstoffverbrauch führen würde, weist sie mehrere hier nicht dargestellte Rungen auf, welche lösbar mit der Ladefläche verbunden werden können, beispielsweise indem sie in entsprechende Ausnehmungen eingesteckt werden. An der Oberseite sind die Rungen mit den Rollenwagen 4, 5 verbunden.

Figur 2 zeigt eine perspektivische Ansicht eines vorderen zweiten Endes 12 der in Figur 1 dargestellten Schiebeverdeckstruktur 1 in geöffnetem Zustand, in welchem der Portalbalken 8 mittels der Verbindungsstruktur 41 nach oben verschwenkt ist und die in diesem Zustand zusammengeklappten Faltplatten 9 jeweils zusammengefaltet sind, so dass sich auch die mittig in den Faltplatten 9 angeordneten Spriegel 2 in einer angehobenen Stellung befinden. Wie hier gut erkennbar ist, ist die Spriegelanbindung 10 mittig in den Faltplatten 9 ausgebildet. Die zusammengeschobenen Spriegel 2 inklusive Portalbalken 8 erstrecken sich in dem hier dargestellten Zustand über eine Länge von 1,90 m.

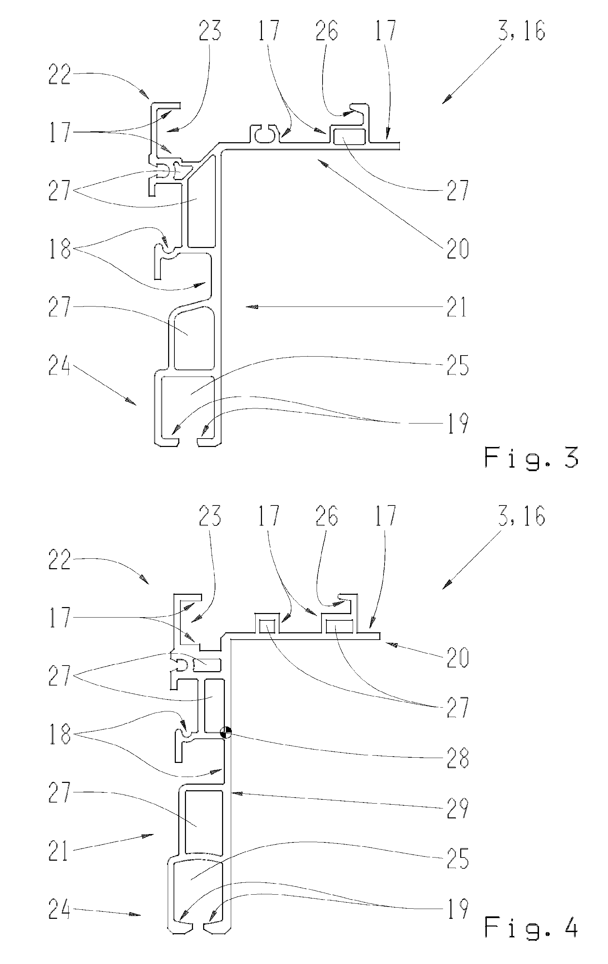

Figur 3 zeigt eine Schnittansicht eines Längsgurts 3 für eine Schiebeverdeckstruktur 1 (siehe Figur 1) eines Lastwagens, welcher einen einstückigen Profilkörper 16 mit einer Vielzahl von Laufflächen umfasst. Hier sind erste Laufflächen 17 für Rollen einer Vielzahl von Rollenwagen zum Bewegen einer oberen Dachstruktur, welches die in Figur 1 beschriebenen Rollenwagen mit Seilanbindung 4, die Standard-Rollenwagen 5 und die Endrollenwagen 6 sind, zweite Laufflächen 18 für Rollen einer Vielzahl von Rollenwagen zum Bewegen einer seitlichen Wandstruktur und dritte Laufflächen 19 zur Aufnahme von Rollen mit daran angeordneten Rungen vorgesehen. Der Profilkörper 16 aus einem Winkelprofil mit einem horizontalen ersten Schenkel 20, welcher die ersten Laufflächen 17 aufweist, und einem vertikalen zweiten Schenkel 21, welcher die zweiten und dritten Laufflächen 18, 19 aufweist, ausgebildet. Wie hier erkennbar ist, liegen die in der Figur linken ersten Laufflächen 17 vertikal fluchtend über einer der zweiten Laufflächen 18 und einer der dritten Laufflächen 19. Die dritten Laufflächen 19 sind in einer Laufkammer 25 in einem Endabschnitt 24 des zweiten Schenkels 21 ausgebildet. Weiterhin ist erkennbar, dass sowohl die ersten Laufflächen 17 horizontal und vertikal ausgerichtete Laufflächen, d. h. Laufflächen, die in der vertikalen Ebene verlaufen und Laufflächen, die in der horizontalen Ebene verlaufen, als auch die zweiten Laufflächen 18 horizontal und vertikal ausgerichtete Laufflächen aufweisen. Darüber hinaus sind zwei vertikal gegenüberliegende der ersten Laufflächen 17 in einem Verbindungseckbereich 22 des ersten Schenkels 20 und des zweiten Schenkels 21 angeordnet, um als obere und untere Lauffläche für die Rollen der Rollenwagen 4, 5, 6 zum Bewegen der Dachstruktur zu dienen.

Der Verbindungseckbereich 22 bildet somit eine im Wesentlichen U-förmige Laufkammer 23. Weiterhin weist der erste Schenkel 20 eine im Wesentlichen horizontal ausgerichtete Anschlagfläche 26 auf, welche als Eingriffsfläche für einen mit einer entsprechenden Gegenfläche ausgebildeten Rollenwagen von der Vielzahl von Rollenwagen zum Bewegen der oberen Dachstruktur dient. Sowohl der erste Schenkel 20 des Profilkörpers 16 als auch der zweite Schenkel 21 weisen Versteifungstunnel 27 auf. In der hier dargestellten Ausführungsform weist der erste Schenkel 20 einen Versteifungstunnel 27 und der zweite Schenkel 21 drei Versteifungstunnel 27 auf. Der hier dargestellte Längsgurt 3 ist aus Aluminium hergestellt und weist ein Gewicht von 5,41 kg/m, ein Flächenmoment in der X-Richtung von 674 cm⁴ und ein Flächenmoment in der Y-Richtung von 153 cm⁴ auf.

Figur 4 zeigt eine Schnittansicht eines Längsgurts 3 gemäß einer weiteren Ausführungsform, welche sich von der in Figur 3 dargestellten Ausführungsform dadurch unterscheidet, dass sie in der X-Richtung ein Flächenmoment von 245,5 cm⁴ und in der Y-Richtung ein Flächenmoment von 1438 cm⁴ aufweist und dadurch, dass an dem ersten Schenkel 20 zwei Versteifungstunnel 27 vorgesehen sind. Der Massenschwerpunkt des Längsgurts 3 liegt an der durch das Bezugszeichen 28 gekennzeichneten Stelle. Wie hier erkennbar ist, liegt der Massenschwerpunkt 28 des Profilkörpers 16 an einem inneren Profilrand 29, insbesondere der der Fahrzeugmitte zugewandte Profilrand, des vertikalen zweiten Schenkels 21.

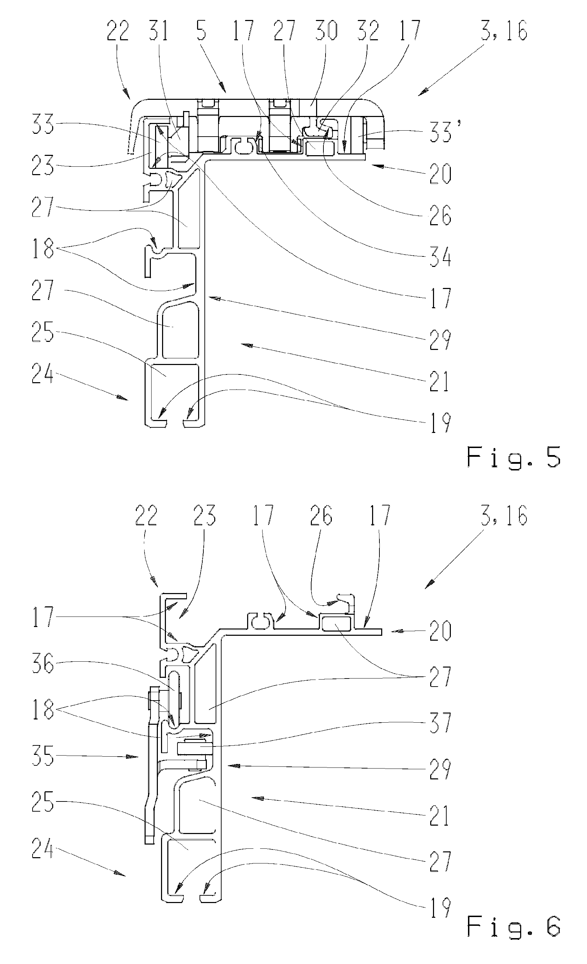

Figur 5 zeigt eine Schnittansicht des in Figur 3 dargestellten Längsgurts 3, hier nur mit einem Standard-Rollenwagen 5 für die obere Dachstruktur. Wie hier erkennbar ist, ist der Standard-Rollenwagen 5 mehrteilig mit einem oberen ersten Teil 30 und einem unteren zweiten Teil 31 ausgestattet, welche lösbar voneinander sind, um den Rollenwagen in den Längsgurt 3 einzuspuren bzw. davon abzunehmen. Um einen sicheren Halt auf dem Längsgurt 3 zu gewährleisten, greift der an dem Standard-Rollenwagen 5 vorgesehene Vorsprung 32 unter die an dem ersten Schenkel 20 des Profilkörpers 16 ausgebildete Anschlagfläche 26. Außerdem ist die äußere linke Rolle 33 des Standard-Rollenwagens 5 in der U-förmigen Laufkammer 23 aufgenommen, wobei die ersten horizontal ausgerichteten Laufflächen 17 die Rolle 33 von oben und von unten begrenzen. Der Standard-Rollenwagen 5 weist darüber hinaus auf der rechten Seite eine weitere äußere Rolle 33' auf. In der Mitte ist eine radiale Führungsrolle 34 vorgesehen, welche an den vertikal ausgerichteten Laufflächen 17 des ersten Schenkels 20 läuft.

Figur 6 zeigt eine Schnittansicht des in Figur 3 dargestellten Längsgurts 3, hier nur mit Seitenrollenwagen bzw. Rollenwagen zum Bewegen der seitlichen Wandstruktur 35, welcher mit Rollen 36 versehen ist, welche an der horizontal ausgerichteten Lauffläche 18 laufen, und mit einer Abstandsrolle 37, welche an der vertikal ausgerichteten Lauffläche 18 des zweiten Schenkels 21 läuft.

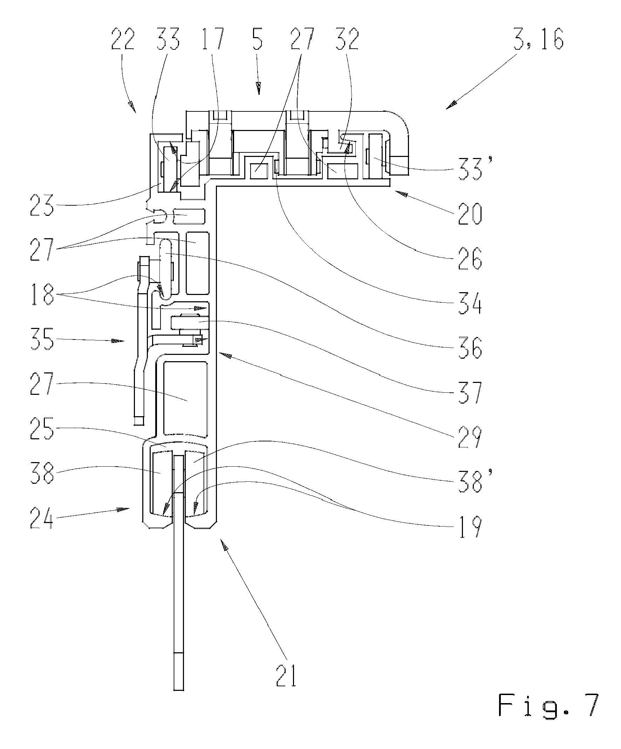

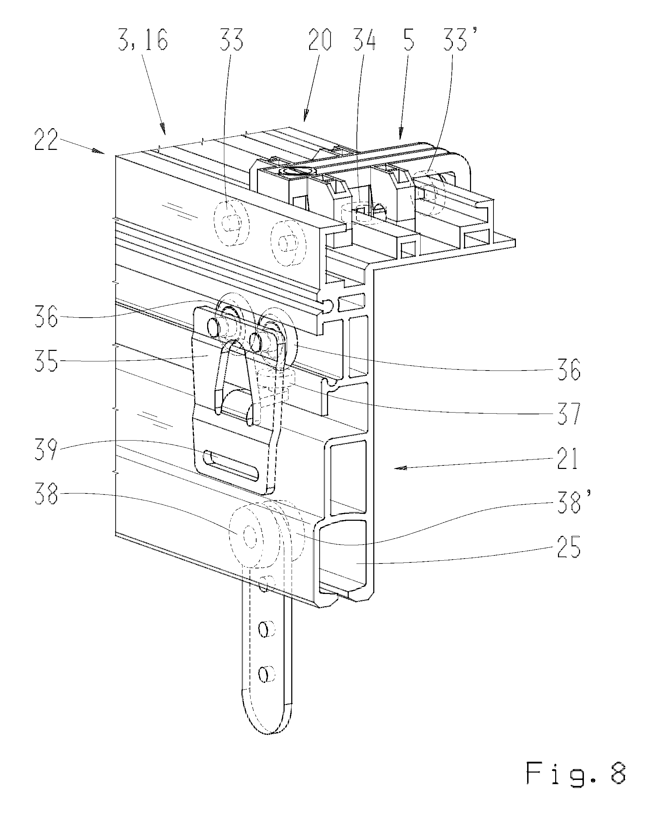

Figur 7 zeigt eine Schnittansicht des in Figur 4 dargestellten Längsgurts 3 mit allen Rollenwagen. Der Standard-Rollenwagen 5 weist zwei äußere linke Rollen 33 auf, von denen hier nur eine sichtbar ist, und eine äußere rechte Rolle 33. Darüber hinaus ist in der Mitte die radiale Führungsrolle 34 vorgesehen. Der Standard-Rollenwagen 5 ist auf dem ersten Schenkel 20 des Profilkörpers 16 hin und her bewegbar. Weiterhin ist erkennbar, dass der Seitenrollenwagen 35 zwei Rollen 36 und eine Abstandsrolle 37 aufweist. Außerdem ist der Seitenrollenwagen 35 mit einer Lasche 39 (siehe Figur 8) ausgestattet, welche zum Befestigen der seitlichen Gurte der Seitenplane dient. An dem Endabschnitt 24 des zweiten Schenkels 21 ist darüber hinaus die Laufkammer 25 vorgesehen, in welcher Laufrollen 38, 38' mit Kugellager für die hier nicht dargestellten vertikal verlaufenden Rungen angeordnet sind.

Figur 8 zeigt eine perspektivische Ansicht des in Figur 7 dargestellten Längsgurts 3, bei welchem nochmals besonders gut die Anordnung der verschiedenen Rollenwagen, nämlich des Standard-Rollenwagens 5, des Seitenrollenwagens 35 und der Laufrollen 38, 38' an den ersten und zweiten Schenkeln 20, 21 des Profilkörpers 16 des Längsgurts 3 erkennbar ist.

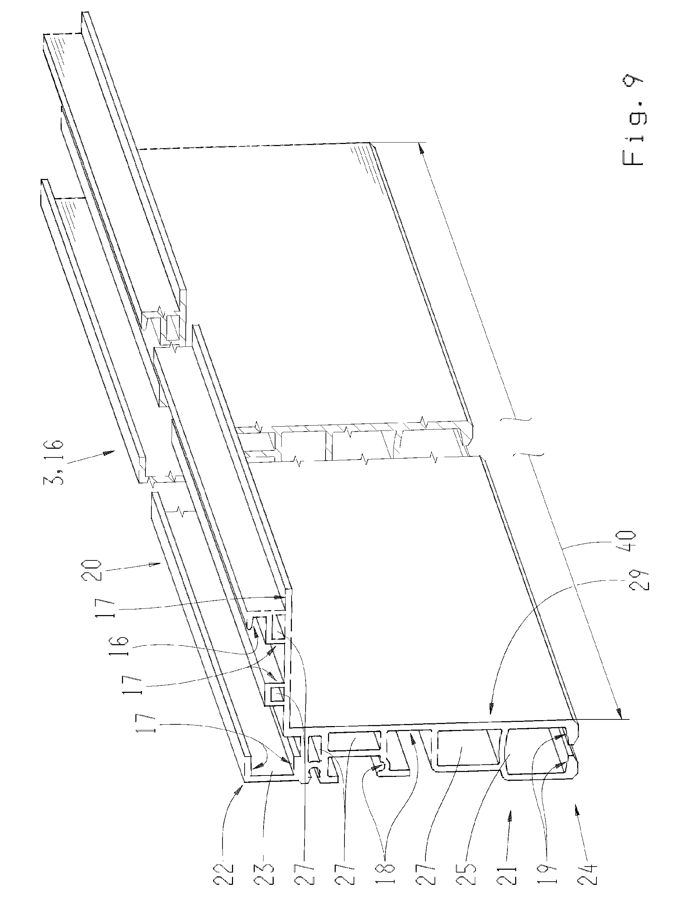

Figur 9 zeigt eine weitere perspektivische Ansicht des in Figur 4 dargestellten Längsgurts 3 ohne daran angeordnete Rollenwagen. Der als Aluschiene ausgebildete Längsgurt 3 weist eine Länge 40 von 13,6 m auf.

### Bezugszeichen

- 1: Schiebeverdeckstruktur
- 2: Spriegel
- 3, 3': Längsgurte
- 4: Rollenwagen mit Seilanbindung
- 5: Standard-Rollenwagen
- 6: Endrollenwagen
- 7: erstes Ende
- 8: Portalbalken
- 9: Faltplatten
- 10: Spriegelanbindung
- 11: Rollen
- 12: zweites Ende
- 13: Verriegelungsmechanismus
- 14: Entriegelungsseil
- 15: Schlaufe
- 16: Profilkörper
- 17: erste Laufflächen
- 18: zweite Laufflächen
- 19: dritte Laufflächen
- 20: erster Schenkel
- 21: zweiter Schenkel
- 22: Verbindungseckbereich
- 23: U-förmige Laufkammer
- 24: Endabschnitt
- 25: Laufkammer am Endabschnitt
- 26: Anschlagfläche
- 27: Versteifungskammer
- 28: Massenschwerpunkt
- 29: innerer Profilrand
- 30: erster Teil
- 31: zweiter Teil
- 32: Vorsprung
- 33, 33': Rollen des Standard-Rollenwagens
- 34: radiale Führungsrolle
- 35: Seitenrollenwagen
- 36: Rollen des Seitenrollenwagens
- 37: Abstandsrolle
- 38, 38': Laufrollen
- 39: Lasche
- 40: Länge
- 41: Verbindungsstruktur

## Patentansprüche

1. Längsgurt (3, 3') für eine Schiebeverdeckstruktur eines Lastwagens, welcher einen einstückigen Profilkörper (16) mit einer Vielzahl von Laufflächen (17, 18, 19) umfasst, wobei erste Laufflächen (17) für Rollen (33, 33', 34) einer Vielzahl von Rollenwagen (4, 5, 6) zum Bewegen einer oberen Dachstruktur, zweite Laufflächen (18) für Rollen (36, 37) einer Vielzahl von Rollenwagen (35) zum Bewegen einer seitlichen Wandstruktur und dritte Laufflächen (19) zur Aufnahme von Rollen (38, 38') zum Halten und Bewegen von Rungen vorgesehen sind, **dadurch gekennzeichnet, dass** der Profilkörper (16) aus einem Winkelprofil mit einem horizontalen ersten Schenkel (20), welcher die ersten Laufflächen (17) aufweist, und einem vertikalen zweiten Schenkel (21), welcher die zweiten und dritten Laufflächen (18, 19) aufweist, gebildet ist.

2. Längsgurt (3, 3') gemäß Anspruch 1, **dadurch gekennzeichnet, dass** zumindest eine der ersten Laufflächen (17) im Wesentlichen vertikal fluchtend über zumindest einer der zweiten Laufflächen (18) angeordnet ist.

3. Längsgurt (3, 3') gemäß Anspruch 1 oder 2, **dadurch gekennzeichnet, dass** der Massenschwerpunkt (28) des Profilkörpers (16) an einem inneren Profilrand (29), insbesondere der der Fahrzeugmitte zugewandte Profilrand, des vertikalen zweiten Schenkels (21) liegt.

4. Längsgurt (3, 3') gemäß einem der Ansprüche 1 bis 3, **dadurch gekennzeichnet, dass** die zweiten Laufflächen (18) horizontale und vertikale Laufflächen umfassen, wobei an der vertikalen Lauffläche der zweiten Laufflächen (18) eine Abstandsrolle (37) eines Rollenwagens (35) von der Vielzahl von Rollenwagen (35) zum Bewegen der seitlichen Wandstruktur läuft.

5. Längsgurt (3, 3') gemäß einem der Ansprüche 1 bis 4, **dadurch gekennzeichnet, dass** die ersten Laufflächen (17) horizontale und vertikale Laufflächen umfassen, wobei an der horizontalen Lauffläche der ersten Laufflächen (17) eine radiale Führungsrolle (34) eines Rollenwagens (4, 5, 6) von der Vielzahl von Rollenwagen (4, 5, 6) läuft.

6. Längsgurt (3, 3') gemäß einem der Ansprüche 1 bis 5, **dadurch gekennzeichnet, dass** zumindest eine der ersten Laufflächen (17) in einem Verbindungseckbereich (22) des ersten Schenkels (20) und des zweiten Schenkels (21) angeordnet ist.

7. Längsgurt (3, 3') gemäß Anspruch 6, **dadurch gekennzeichnet, dass** zwei der ersten Laufflächen (17) in dem Verbindungseckbereich (22) angeordnet sind, welche in vertikaler Richtung gegenüberliegend angeordnet sind, um als obere und untere Lauffläche für eine Rolle (33) eines Rollenwagens (5) von der Vielzahl von Rollenwagen (4, 5, 6) zum Bewegen der oberen Dachstruktur zu wirken.

8. Längsgurt (3, 3') gemäß Anspruch 6 oder 7, **dadurch gekennzeichnet, dass** der Verbindungseckbereich (22) eine im Wesentlichen U-förmige Laufkammer (23) bildet.

9. Längsgurt (3, 3') gemäß einem der Ansprüche 1 bis 8, **dadurch gekennzeichnet, dass** die dritten Laufflächen (19) an einem Endabschnitt (24) des zweiten Schenkels (21) angeordnet sind.

10. Längsgurt (3, 3') gemäß einem der Ansprüche 1 bis 9, **dadurch gekennzeichnet, dass** der erste Schenkel (20) eine im Wesentlichen horizontal ausgerichtete Anschlagfläche (26) aufweist, welche als Eingriffsfläche für einen mit einer entsprechenden Gegenfläche (32) ausgebildeten Rollenwagen (4, 5, 6) von der Vielzahl von Rollenwagen (4, 5, 6) zum Bewegen der oberen Dachstruktur dient.

11. Längsgurt (3, 3') gemäß einem der Ansprüche 1 bis 10, **dadurch gekennzeichnet, dass** der Profilkörper (16) mit zumindest einem Versteifungstunnel (27) ausgebildet ist.

12. Längsgurt (3, 3') gemäß Anspruch 11, **dadurch gekennzeichnet, dass** an dem ersten Schenkel (20) zumindest ein, insbesondere zwei, Versteifungstunnel (27) vorgesehen sind.

13. Längsgurt (3, 3') gemäß Anspruch 11 oder 12, **dadurch gekennzeichnet, dass** an dem zweiten Schenkel (21) mindestens ein, insbesondere zumindest zwei, insbesondere drei, Versteifungstunnel (27) vorgesehen sind.

14. Schiebeverdeckstruktur (1), **dadurch gekennzeichnet, dass** die Schiebeverdeckstruktur (1) zumindest einen Längsgurt (3, 3'), insbesondere zwei parallel angeordnete Längsgurte (3, 3'), gemäß einem der Ansprüche 1 bis 13 aufweist.
